# EUROPÄISCHE PATENTSCHRIFT

(11) **EP 0 964 279 B1**
(45) Veröffentlichungstag und Bekanntmachung des Hinweises auf die Patenterteilung: **05.11.2003**
(21) Anmeldenummer: 99111353.1
(22) Anmeldetag: 10.06.1999
(51) Int. Cl.: G02B 6/42, G02B 6/36

(54) **Optische Verbindungseinheit**
Optical coupling unit
Unité de couplage optique

(30) Priorität: 12.06.1998 DE 19826275
(43) Veröffentlichungstag der Anmeldung: 15.12.1999
(73) Patentinhaber: Delphi Technologies, Inc., Troy, MI 48007 (US)
(72) Erfinder: Rucks, Michael, 58239 Schwerte (DE); Mihm, Achim, 42389 Wuppertal (DE)
(74) Vertreter: Manitz, Finsterwald & Partner

(56) Entgegenhaltungen:
- DE-A- 3 902 411
- US-A- 4 045 121
- US-A- 4 212 514
- US-A- 4 218 113
- US-A- 5 134 676
- US-A- 5 230 032
- PATENT ABSTRACTS OF JAPAN vol. 004, no. 039 (P-004), 28. März 1980 (1980-03-28) & JP 55 009535 A (NIPPON TELEGR & TELEPH CORP), 23. Januar 1980 (1980-01-23)

## Beschreibung

Die vorliegende Erfindung betrifft eine optische Verbindungseinheit zum optisch leitenden Verbinden von Licht leitenden, aufnehmenden und/oder abgebenden optischen Elementen nach dem Oberbegriff des Anspruchs 1. Weiterhin ist die Vorrichtung auf die Verwendung einer solchen optischen Verbindungseinheit in einem optischen Netzwerk gerichtet.

Optische Verbindungseinheiten dieser Art werden überall dort benötigt, wo optische Signale von einem Ort zu einem anderen Ort übertragen werden sollen. Dabei kann es sich bei den optischen Signalen um Datensignale, d. h. bestimmte, auszuwertende Informationen tragende Signale, und hierbei insbesondere um digitale Datensignale handeln. Die optischen Signale können jedoch auch einfache Lichtsignale ohne speziellen Informationsgehalt darstellen, wie sie beispielsweise zur Beleuchtung verwendet werden.

Um einen möglichst geringen Intensitätsverlust bei der Übertragung der optischen Signale gewährleisten zu können, muß die optische Kopplung zwischen den Verbindungsstellen unterschiedlicher, in der Lichtübertragungsstrecke vorhandener Leitungsabschnitte möglichst verlustfrei ausgebildet sein. Dazu ist es erforderlich, daß die zusammenwirkenden Kopplungsflächen zweier aneinander angrenzender Leitungsabschnitte unmittelbar, d. h. ohne Abstand aneinander anliegen.

Bei bekannten Verbindungseinheiten müssen die entsprechenden optischen Elemente, beispielsweise Stecker und zugehörige Kupplung, entweder mit entsprechend hoher Präzision gefertigt werden oder es werden jeweils die miteinander zu verbindenden Elemente durch an den jeweiligen Gehäusen dieser Elemente angreifende Federelemente so zusammengespannt, daß die Kopplungsflächen der beiden optischen Elemente aneinander anliegen.

Die erste dieser Lösungen hat den Nachteil, daß sie hohe Anforderungen an die Herstellung der verwendeten Teile stellt und somit entsprechend kostenaufwendig ist. Nachteilig an der zweiten angegebenen Lösung ist es, daß die aneinander anliegenden Kontaktflächen der optischen Elemente beispielsweise durch versehentliches Ziehen an den Lichtleitern entgegen der die Elemente zusammenhaltende Federkraft auseinanderbewegt werden können, wodurch die optische Dämpfung sprunghaft ansteigt bzw. schlimmstenfalls die optische Kopplung vollständig unterbrochen wird.

Ein weiterer Nachteil besteht darin, daß beispielsweise bei einer Verbindung von zwei oder mehreren Lichtleitern über ein gemeinsames Knotenelement oder bei Verbindung eines oder mehrerer Lichtleiter mit einem Sende- oder Empfangselement beispielsweise über einen Mischer, d. h. einen optischen Verteiler oder eine optische Sammeleinheit, jeweils an allen Kontaktstellen des Knotenelements bzw. des Mischers, zumindest jedoch an seiner Ein- und an seiner Austrittsseite jeweils separate Federelemente vorgesehen werden müssen. Dadurch werden die Kosten für entsprechende Verbindungseinheiten weiter erhöht.

Aus der US 4,212,514 ist eine optische Verbindungseinheit der eingangs genannten Art bekannt. Der Lichtleiter ist dabei als transparentes Elastomer ausgebildet, dessen Enden innerhalb von Anschlusskanälen eines Gehäuses angeordnet sind. Ohne angeschlossene optische Elemente besitzt das Elastomer eine im Wesentlichen zylinderförmige Außenkontur beziehungsweise eine Kontur, die sich aus mehreren zylinderförmigen Elementen zusammensetzt. Zum Verbinden der optischen Elemente müssen deren Enden in die Kanäle eingeführt werden, bis aufgrund des vorhandenen Druckes eine Stauchung und damit eine Vorspannung des Elastomers erfolgt.

Aus der US 5,230,032 ist ebenfalls eine optische Verbindungseinheit bekannt. Die zu verbindenden Lichtleiter besitzen dabei an ihren zu verbindenden Enden jeweils speziell ausgestalte Anschlusselemente, die miteinander so verkoppelt werden können, dass die beiden Enden der Lichtleiter in Kontakt miteinander treten.

Dabei wird eine Vorspannung eines Lichtleiterendes durch seitliches Auslenken bewirkt.

Eine Aufgabe der Erfindung ist es, eine optische Verbindungseinheit der eingangs genannten Art so auszubilden, daß eine einfache und dabei gleichzeitig sichere optische Verbindung zwischen Licht leitenden, aufnehmenden und/oder abgebenden optischen Elementen möglich ist, wobei die Dämpfung der optischen Verbindung auch bei mechanischer Beanspruchung minimal bleiben soll.

Erfindungsgemäß wird diese Aufgabe durch eine optische Verbindungseinheit mit den Merkmalen des Anspruchs 1 gelöst.

Erfindungsgemäß ist somit das optische Übertragungselement selbst als Federelement ausgebildet, so daß unmittelbar durch die durch das optische Übertragungslement bewirkte Federvorspannung die Kontaktflächen des optischen Übertragungselements und der an die optische Verbindungseinheit anzukoppelnden optischen Elemente aneinandergepreßt werden. Dadurch, daß die Kopplungsfläche des Übertragungselements in Richtung der Kopplungsfläche des optischen Elements hin vorspannbar ist, ist gewährleistet, daß bei einem versehentlichen Auseinanderziehen des Übertragungselements und des angekoppelten optischen Elementes, beispielsweise durch mechanische Beanspruchung, die Kopplungsfläche des Übertragungselements aufgrund der dem Übertragungselement eigenen Vorspannung der Bewegung des optischen Elements folgt, so daß eine Auseinanderbewegung der beiden aneinander liegenden Kopplungsflächen verhindert wird. Ein Anstieg der Dämpfung zwischen den miteinander verbundenen optischen Elementen oder eine Unterbrechung der optischen Verbindung wird somit zumindest bis zu einer bestimmten Maximalverschiebung der Kopplungsfläche des optischen Elementes zuverlässig verhindert. Aufgrund der seitlichen Ausbiegung des Lichtleiters im entspannten zustand ist zum einen die Biegerichtung des Lichtleiters beim Vorpannen vorgegeben und zum anderen und ein Stauchen des Lichtleiters zuverlässig verhindert.

Nach einer weiteren bevorzugten Ausführungsform der Erfindung weist das Übertragungselement zumindest zwei Kopplungsflächen zur Ankopplung an die optischen Elemente auf. Auf diese Weise können beispielsweise zwei oder mehrere Lichtleiter sehr einfach miteinander verbunden werden. Es ist jedoch grundsätzlich auch möglich, daß das Übertragungselement nur eine speziell ausgebildete Kopplungsfläche zur Ankopplung beispielsweise an eine Licht aussendende Signalquelle aufweist und daß das auf diese Weise in das Übertragungselement eingekoppelte Licht über einen einstückig mit der Verbindungseinheit ausgebildeten Lichtleiter zu einem Zielort geleitet und dort beispielsweise zur Anzeige einer bestimmten Information abgestrahlt wird. Weiterhin ist es möglich, daß das Übertragungselement mehr als zwei Kopplungsflächen besitzt, so daß eine Vielzahl von optischen Elementen über eine einzige optische Verbindungseinheit miteinander verbunden werden können.

Nach einer weiteren bevorzugten Auführungsform der Erfindung umfaßt das Übertragungslement einen elastischen Lichtleiter, insbesondere ein Kunststoff- oder Glasfaserkabel. Dabei werden die Kopplungsflächen vorteilhaft durch die Stirnflächen des Lichtleiters gebildet.

Auf diese Weise ist eine sehr einfache und kostengünstige Ausbildung einer optischen Verbindungseinheit möglich, wobei bei Verwendung der optischen Verbindungseinheit zum Verbinden von mehreren optischen Elementen beide Stirnflächen des Lichtleiters genutzt werden. Es ist jedoch auch möglich, daß es sich bei dem das Übertragungselement bildenden Lichtleiter lediglich um das Ende eines längeren Lichtleiters handelt, so daß die optische Verbindungseinheit mit diesem längeren Lichtleiter einstückig ausgebildet ist. In diesem Fall kann ein weiteres optisches Element unmittelbar mit dem längeren Lichtleiter über die integral ausgebildete optische Verbindungseinheit verbunden werden. Bei Ausbildung des Lichtleiters aus elastischem Material kann die Federwirkung unmittelbar durch Verformung, insbesondere durch seitliches Ausbiegen des Lichtleiters erzielt werden.

Nach einer weiteren vorteilhaften Ausführungsform der Erfindung sind seitlich des Lichtleiters elastische Elemente, insbesondere elastisches Material vorgesehen, durch die der Lichtleiter im wesentlichen in einer vorgegebenen Form gehalten wird. Das optische Übertragungselement wird in diesem Fall durch die Kombination von Lichtleiter und elastischen Elementen gebildet. Bevorzugt ist der Lichtleiter zumindest bereichsweise von elastischem Material umgeben. Bei dieser Ausführungsform wird die Ausbildung des Übertragungselements als Federelement durch die zusätzlichen elastischen Elemente erreicht. Der Lichtleiter ist so bezüglich der elastischen Elemente bzw. in dem elastischen Material eingebettet oder zumindest in einem vorgegebenen Abstand von diesem umgeben, daß eine seitliche Verformung, beispielsweise eine Verbiegung, des Lichtleiters auch eine Verformung der elastischen Elemente bzw. des elastischen Materials bewirkt. Durch die dabei entstehenden Rückstellkräfte innerhalb der elastischen Elemente bzw. des elastischen Materials ist gewährleistet, daß die Kopplungsfläche bzw. die Kopplungsflächen des Lichtleiters in Richtung ihrer der entspannten Stellung entsprechenden jeweiligen Ausgangsposition vorgespannt werden. Grundsätzlich ist es auch möglich, den Lichtleiter zusätzlich aus elastischem Material herzustellen, so daß die Funktionalität eines Federelements durch eine Kombination eines elastischen Lichtleiters mit einem diesen umgebenden elastischen Material erreicht wird.

Erfindungsgemäß ist der Lichtleiter in einem Gehäuse angeordnet, wobei die Enden des Lichtleiters durch in dem Gehäuse ausgebildete Öffnungen nach außen geführt sind und diese nach außen ragenden Abschnitte des Lichtleiters bei einer Vorspannung des Übertragungselements zum Inneren des Gehäuses hin bewegt werden. Erfindungsgemäß sind die beiden Enden des Lichtleiters durch die Gehäusewand nach außen geführt und bewegbar.

Durch diese Ausbildung wird erreicht, daß im entspannten Zustand der die Kopplungsfläche tragende Endabschnitt bzw. die Endabschnitte des Lichtleiters maximal aus dem Gehäuse herausragt, so daß die Kopplungsfläche des mit der Verbindungseinheit zu verbindenden optischen Elements jeweils an die aus dem Gehäuse herausragende Kopplungsfläche angesetzt werden kann. Werden die optischen Elemente nach erfolgter Kontaktierung der jeweiligen Kopplungsflächen weiter in Richtung des Gehäuses bewegt, so wird der Lichtleiter innerhalb des Gehäuses entgegen der Federvorspannung verformt, so daß die jeweiligen Kopplungsflächen unter Vorspannung aneinander anliegen. Dadurch wird eine zuverlässige und dämpfungsarme Verbindung gewährleistet. Die Vorspannung des Übertragungselements wird erfindungsgemäß somit automatisch durch das Ansetzen und Fixieren des jeweiligen optischen Elements an der optischen Verbindungseinheit erzeugt.

Nach einer weiteren vorteilhaften Ausführungsform der Erfindung ist an dem Gehäuse ein Betätigungsorgan zum Vorspannen des Übertragungselements vorgesehen. Bei dieser Ausführungsform ist es somit möglich, die Vorspannung des Übertragungselement, beispielsweise durch Verbiegen des Lichtleiters über einen seitlich an dem Lichtleiter angreifenden an dem Gehäuse vorgesehenen Druckknopf zu bewirken. Dies kann beispielsweise dann sinnvoll sein, wenn die optische Verbindungseinheit in eine größere Baueinheit eingesetzt werden soll und die im entspannten Zustand aus dem Gehäuse herausragenden Enden des Lichtleiters beim Einsetzen der optischen Verbindungseinheit in die Baueinheit stören würden.

Beispielsweise kann in der Baueinheit ein an einer Leiterplatte fixiertes optoelektrisches Element sowie in einem bestimmten Abstand dazu das Ende eines an der Baueinheit befestigten einzelnen Lichtleiters oder eines Lichtleiterbündels vorgesehen sein, die über eine erfindungsgemäß ausgebildete optische Verbindungseinheit verbunden werden sollen. Vor Einsetzen der Verbindungseinheit kann durch Betätigen des Tasters das optische Übertragungselement vorgespannt werden, wobei die Enden des Lichtleiters zurückgezogen werden. In diesem Zustand kann die Verbindungseinheit in den Bereich zwischen dem optoelektrischen Element und dem Ende des Lichtleiters bzw. des Lichtleiterbündels eingesetzt werden, woraufhin der Taster freigegeben wird. Aufgrund der Vorspannung des optischen Übertragungselements werden dessen Enden nach außen verschoben, so daß sie unter Spannung an den Kopplungsflächen des optoelektrischen Elements und des Lichtleiters bzw. des Lichtleiterbündels zur Anlage kommen.

Weitere vorteilhafte Ausführungsformen der Erfindung sind in den Unteransprüchen angegeben.

Die Erfindung wird nachfolgend anhand von Ausführungsbeispielen unter Bezugnahme auf die Zeichnungen näher beschrieben; in diesen zeigen:
- Fig. 1: eine schematische teilweise geschnittene Perspektivdarstellung einer optischen Verbindungseinheit,
- Fig. 2: eine Ausführungsform einer weiteren optischen Verbindungseinheit in Schnittdarstellung,
- Fig. 3: ein schematisches Ersatzschaltbild zur Erläuterung der Funktion einer erfindungsgemäß ausgebildeten Verbindungseinheit,
- Fig. 4: eine teilweise aufgerissene, perspektivische Darstellung einer erfindungsgemäßen optischen Verbindungseinheit,
- Fig. 5: eine weitere Ausführungsform der Erfindung im entspannten Zustand,
- Fig. 6: die Vorrichtung nach Fig. 5 im vorgespannten Zustand,
- Fig. 7: eine weitere Ausführungsform der Erfindung im entspannten Zustand und

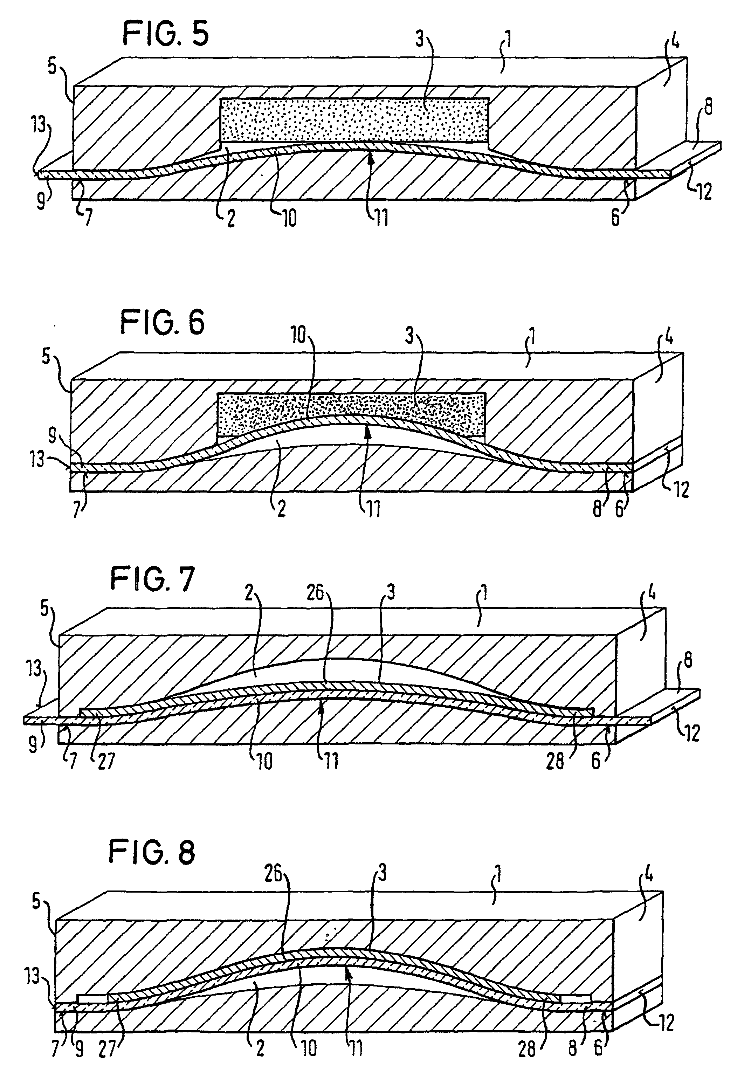

- Fig. 6: die Vorrichtung nach Fig. 7 im vorgespannten Zustand.

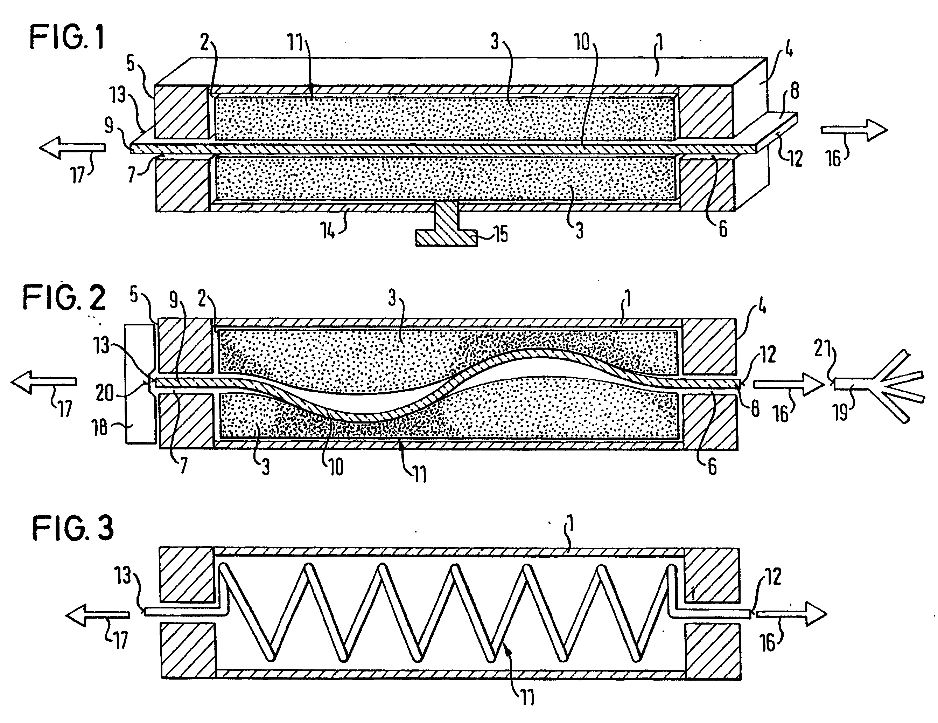

Die in Fig. 1 dargestellte optische Verbindungseinheit umfaßt ein Gehäuse 1 mit einem innenliegenden Hohlraum 2, der mit elastischem Material 3, beispielsweise mit einem Elastomer, Silikon oder dergleichen ausgefüllt ist.

Das Gehäuse 1 besitzt an seinen sich gegenüberliegenden Stirnseiten 4, 5 Öffnungen 6, 7, durch die die freien Enden 8, 9 eines Lichtleiters 10 herausragen.

Der Lichtleiter 10 erstreckt sich über die gesamte Länge des Gehäuses 1 sowie durch dieses und durch das elastische Material 3 hindurch, so daß sowohl oberhalb als auch unterhalb des Lichtleiters 10 elastisches Material 3 vorhanden ist.

Der Lichtleiter 10 bildet zusammen mit dem elastischen Material 3 ein optisches Übertragungselement 11, wobei die an den freien Enden 8, 9 angeordneten Stirnseiten des Lichtleiters 10 als Kopplungsflächen 12, 13 zum optischen Ankoppeln an Licht leitende, aufnehmende und/oder abgebende optische Elemente ausgebildet sind.

In einer Seitenwand 14 des Gehäuses 1 ist ein Taster 15 vorgesehen, über den das elastische Material 3 mit einer Kraft im wesentlichen senkrecht zur Längsachse des Lichtleiters 10 beaufschlagbar ist. Die über den Taster 15 auf das unterhalb des Lichtleiters 10 angeordnete elastische Material 3 abgegebene Kraft wird auf den Lichtleiter 10 und über diesen auf das oberhalb des Lichtleiter 10 angeordnete elastische Material 3 übertragen, so daß beim Betätigen des Tasters 15 der Lichtleiter 10 eine in Fig. 1 nach oben gekrümmte Form einnimmt. Dadurch werden gleichzeitig die freien Enden 8, 9 und damit auch die Kopplungsflächen 12, 13 des Lichtleiters 10 zum Inneren des Gehäuses 1 hin bewegt. Die auf diese Weise-dem aus dem Lichtleiter 10 und dem elastischen Material 3 bestehenden optischen Übertragungselement 11 aufgeprägte Vorspannung bewirkt, daß die Kopplungsflächen 12, 13 in Richtung von Pfeilen 16, 17 vorgespannt sind.

Fig. 2 zeigt die optische Verbindungseinheit gemäß Fig. 1 ohne Taster 15. Dabei ist das optische Übertragungselement 11 in seiner vorgespannten Stellung dargestellt, in der der Lichtleiter 11 einen S-förmigen Verlauf besitzt und das elastische Material 3 entsprechend komprimierte und entlastete Bereiche besitzt.

Die in Fig. 2 dargestellte Form des Lichtleiters 10 kann beispielsweise dadurch erreicht werden, daß die Kopplungsflächen 12, 13 des Lichtleiters 10 in axialer Richtung mit einer zum Inneren des Gehäuses 1 hin gerichteten Kraft beaufschlagt werden, wodurch der Lichtleiter 10 gestaucht wird.

Gegenüber der in Fig. 1 dargestellten entspannten Stellung des Lichtleiters 10 sind die Kopplungsflächen 12, 13 in der in Fig. 2 dargestellten vorgespannten Stellung näher zueinander gerückt, wobei typische Werte für den Abstand zwischen den Kopplungsflächen 12, 13 im entspannten Zustand beispielsweise zwischen 60 und 100 mm, insbesondere ca. 80 mm, und im vorgespannten Zustand jeweils um beispielsweise zwischen 1 und 5 mm, insbesondere um ca. 2 mm verringerte Werte sind. Typische Werte für die maximale seitliche Auslenkung bei der Verformung des Lichtleiters sind zwischen 3 und 20 mm, insbesondere ca. 8 mm.

In Fig. 2 sind zusätzlich zu der optischen Verbindungseinheit optische Elemente 18, 19 schematisch dargestellt, wobei das optische Element 18 beispielsweise ein elektrooptisches Element darstellt, das zum Aussenden und/oder Empfangen von Lichtsignalen ausgebildet ist, während das optische Element 19 ein optisches Mixerelement darstellt, mit dem Lichtsignale verteilt und/oder zusammengeführt werden können. Grundsätzlich ist es mit der erfindungsgemäß ausgebildeten Verbindungseinheit möglich, beliebige Arten von Licht leitenden, aufnehmenden und/oder abgebenden optischen Elementen miteinander zu verbinden.

Das optische Element 18 besitzt eine Kopplungsfläche 20, die zum Ankoppeln an die Kopplungsfläche 13 des Lichtleiters 10 ausgebildet ist.

In gleicher Weise besitzt das optische Element 19 eine Kopplungsfläche 21, die zur Ankopplung an die Kopplungsfläche 12 des Lichtleiters 10 ausgebildet ist.

Die optischen Elemente 18, 19 werden jeweils so an die Stirnseiten 5, 4 des Gehäuses 1 angesetzt, daß die Kopplungsflächen 13 und 20 bzw. 12 und 21 flächig aneinander anliegen. Anschließend werden die optischen Elemente 18, 19 weiter in Richtung des Gehäuses entgegen den Pfeilen 17, 16 bewegt, daß der Lichtleiter 10 in die in Fig. 2 dargestellte vorgespannte Stellung verbracht wird. Durch das teilweise komprimierte elastische Material 3 werden somit die Kopplungsflächen 12, 13 des Lichtleiters 10 in Richtung der Pfeile 16, 17 nach außen vorgespannt und damit gegen die Kopplungsflächen 20, 21 der optischen Elemente 18, 19 gedrückt. Auf diese Weise wird eine sichere Ankopplung der optischen Elemente 18, 19 an den Lichtleiter 10 erreicht.

Die optischen Elemente 18, 19 können dabei auf übliche Weise mit der optischen Verbindungseinheit, insbesondere mit dem Gehäuse 1 verbunden sein, um eine mechanisch stabile Verbindung zu bewirken. Beispielsweise können die optischen Elemente 18, 19 mit dem Gehäuse 1 verschraubt, verrastet oder beispielsweise über einen Klemm-, Bajonettoder Klammerverschluß befestigt sein.

Fig. 3 zeigt schematisch das zugrundeliegende Erfindungsprinzip. Es ist zu erkennen, daß das aus dem elastischen Material 3 und dem Lichtleiter 10 gebildete optische Übertragungselement 11 unmittelbar die Funktion eines Federelements besitzt, so daß bei einer Vorspannung des optischen Übertragungselements 11 die Kopplungsflächen 12, 13 in Richtung der Pfeile 16, 17 vorgespannt sind. Wird beispielsweise versehentlich eines der optischen Elemente 18, 19 oder beide optischen Elemente 18, 19 durch mechanische Beanspruchung in Richtung der Pfeile 16, 17 bewegt, so werden die jeweils aneinander anliegenden Kopplungsflächen 12 und 21 bzw. 13 und 20 nicht voneinander getrennt, sondern die Kopplungsflächen 12, 13 des Lichtleiters 10 folgen aufgrund der Vorspannung des Übertragungselements 11 der Bewegung des optischen Elements 18 bzw. 19. Somit bleibt im Rahmen der maximalen Vorspannung auch bei einer Bewegung der optischen Elemente 18, 19 eine sichere optische Verbindung zwischen der optischen Verbindungseinheit 10 und den optischen Elementen 18 und 19 gewährleistet.

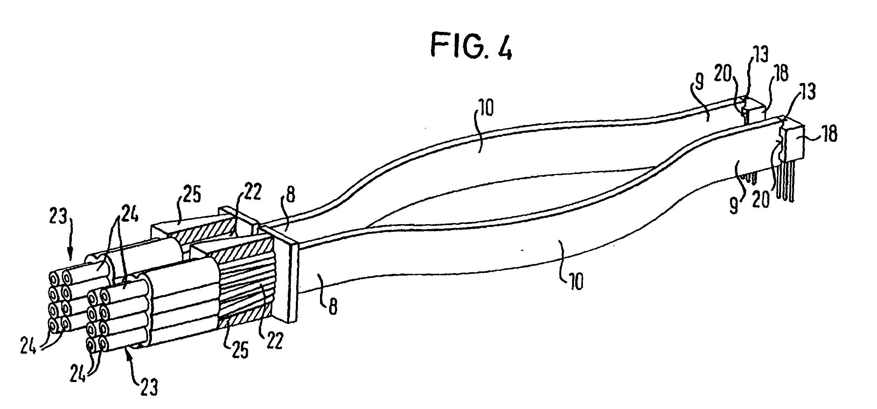

In Fig. 4 ist eine erfindungsgemäß ausgebildete optische Verbindungseinheit mit zwei flexiblen Lichtleitern 10 dargestellt. Dabei ist zur Vereinfachung der Darstellung das Gehäuse sowie eventuell vorhandenes elastisches Material nicht gezeigt.

Während jeweils die an den freien Enden 9 der Lichtleiter 10 ausgebildeten Kopplungsflächen 13 an entsprechenden Kopplungsflächen 20 von zwei optoelektrischen Elementen 18 anliegen, sind an den freien Enden 8 der Lichtleiter 10 jeweils Enden 22 von Lichtleiterbündeln 23 angekoppelt. Die Lichtleiterbündel 23 bestehen jeweils aus acht Lichtleitern 24, von denen jeweils vier übereinanderliegend in einer Reihe angeordnet sind. Die acht Lichtleiter 24 werden in einem aufgeschnitten dargestellten Führungsblock 25 so zusammengeführt, daß ihre Enden in einer einzigen Linie übereinander zu liegen kommen. Auf diese Weise können die Enden der Lichtleiter 24 unmittelbar an die Kopplungsfläche 12 des bandförmigen Lichtleiters 10 angekoppelt werden.

Bei der Ausführungsform nach Fig. 5 ist der Hohlraum 2 so ausgebildet, daß der Lichtleiter 10 in seiner entspannten Stellung bereits leicht vorgebogen ist. Dabei ist "entspannte Stellung" nicht notwendigerweise so zu verstehen, daß der Lichtleiter 10 vollständig frei von Biegespannung ist, sondern daß der Lichtleiter 10 so weit entspannt ist, wie es durch die bauliche Ausgestaltung des Gehäuses 1 möglich ist, so daß die freien Enden 8, 9 des Lichtleiters 10 so weit wie möglich aus dem Gehäuse 1 ausgefahren sind.

Die erfindungsgemäß vorgespannte Stellung des Lichtleiters 10 ist in Fig. 6 dargestellt. Diese vorgespannte Stellung wird beispielsweise durch Zusammendrücken der freien Enden 8, 9 des Lichtleiters 10 erreicht.

Durch diese Ausführung nach den Fig. 5 und 6 wird ein Unterschreiten eines minimalen Biegeradius des Lichtleiters 10 verhindert, so daß beim Vorspannen des Lichtleiters 10 durch Zusammendrücken seiner freien Enden 8, 9 zum einen die Biegerichtung des Lichtleiters 10 vorgegeben ist, nämlich in Richtung der Vergrößerung des minimalen Biegeradius, und zum anderen ein Stauchen des Lichtleiters 10 ausschließlich in axialer Richtung, ohne seitliche Ausbiegung, wie sie gegebenenfalls bei einer linearen Anordnung des Lichtleiters 10 gemäß Fig. 1 auftreten kann, zuverlässig verhindert wird.

Eine weitere Variante mit Begrenzung des minimalen Biegeradius ist in den Fig. 7 und 8 gezeigt. Hier besteht das elastische Element 3 aus einer Blattfeder 26, insbesondere einer Stahlfeder, die entlang eines Teils des Lichtleiters 10 parallel zu diesem verläuft und insbesondere an diesem anliegt. Die Enden 27, 28 der Blattfeder 26 sind im wesentlichen senkrecht zu dem Lichtleiter 10 unverschiebbar, parallel zu dem Lichtleiter 10 jedoch verschiebbar in dem Hohlraum 2 angeordnet, so daß beim Zusammendrücken der Enden 8, 9 des Lichtleiters 10 die Blattfeder 26 durch den Lichtleiter 10 in die in Fig. 8 gezeigte vorgespannte Stellung gedrückt wird. Grundsätzlich kann anstelle einer Blattfeder jede beliebige geeignete Federart, beispielsweise eine Tellerfeder oder eine Schraubenfeder, verwendet werden. Auch kann anstelle von Stahl jedes sonstige, die erforderliche Elastizität aufweisende Material, beispielsweise auch Kunststoff, als Federmaterial verwendet werden.

Während in den Figuren der Lichtleiter 10 jeweils einen rechteckigen Querschnitt besitzt, kann dieser Querschnitt grundsätzlich jede beliebige Form, beispielsweise kreisförmig, ausgebildet sein. Wesentlich ist nur, daß eine Form des Lichtleiters 10 gewählt wird, die entweder durch Einwirkung einer seitlich angreifenden Kraft, beispielsweise über einen oder mehre Taster 15, oder durch axial auf die Stirnseiten des Lichtleiters 10 wirkende Kräfte so veränderbar ist, daß die freien Enden des Lichtleiters 10 zurückgezogen werden. Durch entsprechend elastische Ausgestaltung des Lichtleiters 10 oder durch Vorsehen elastischer Elemente, beispielsweise in Form des elastischen Materials 3 oder der Blattfeder 26, werden die freien Enden des Lichtleiters 10 dann zur Bewirkung einer sicheren optischen Verbindung mit den anzukoppelnden optischen Elementen unter Vorspannung nach außen gedrückt.

### Bezugszeichenliste

- 1): Gehäuse
- 2): Hohlraum
- 3): elastisches Material
- 4): Stirnseite des Gehäuses
- 5): Stirnseite des Gehäuses
- 6): Öffnung
- 7): Öffnung
- 8): freies Ende des Lichtleiters
- 9): freies Ende des Lichtleiters
- 10): Lichtleiter
- 11): optisches Übertragungselement
- 12): Kopplungsfläche
- 13): Kopplungsfläche
- 14): Seitenwand
- 15): Taster
- 16): Pfeil
- 17): Pfeil
- 18): optisches Element
- 19): optisches Element
- 20): Kopplungsfläche
- 21): Kopplungsfläche
- 22): Enden der Lichtleiterbündel
- 23): Lichtleiterbündel
- 24): Lichtleiter
- 25): Führungsblock
- 26): Blattfeder
- 27): Ende der Blattfeder
- 28): Ende der Blattfeder

## Patentansprüche

1. Optische Verbindungseinheit zum optisch leitenden Verbinden von Licht leitenden, aufnehmenden und/oder abgebenden optischen Elementen (19, 18, 23) wobei die optische Verbindungseinheit ein optisches Übertragungselement (11) beeinhaltet, das zumindest eine Kopplungsfläche (12, 13) zum optischen Ankoppeln an eine Kopplungsfläche (21, 20) eines der optischen Elemente (18, 19, 23) aufweist und als Federelement ausgebildet ist, so dass das Übertragungselement (11) mit seiner Kopplungsfläche (12, 13) in Richtung zu der Kopplungsfläche (21, 20) des optischen Elements (19, 18, 23) hin vorspannbar ist, wobei das Übertragungselement (11) einen flexiblen Lichtleiter (10) mit zwei Enden (8, 9) umfasst und der Lichtleiter (10) in einem Gehäuse (1) angeordnet ist,
**dadurch gekennzeichnet,**
**dass** die beiden Enden (8, 9) des Lichtleiters (10) durch in dem Gehäuse (1) ausgebildete Öffnungen (6, 7) nach außen geführt sind, dass der Lichtleiter (10) auch ohne angekoppeltes optisches Element (19, 28, 23) seitlich ausgelenkt ist, und dass beim Ankoppeln von optischen Elementen (19, 28, 23) an das Übertragungselement die beiden nach außen ragenden Enden (8, 9) des Lichtleiters (10) zum Inneren des Gehäuses (1) hin bewegt werden, wodurch ein weiteres seitliches Auslenken des Lichtleiters (10) und ein Vorspannen des Übertragungselementes (11) bewirkt werden.

2. Optische Verbindungseinheit nach Anspruch 1,
**dadurch gekennzeichnet,**
**daß** das Übertragungselement (11) zumindest zwei Kopplungsflächen (12, 13) zur Ankopplung an die optischen Elemente (19, 18, 23) aufweist.

3. Optische Verbindungseinheit nach Anspruch 2,
**dadurch gekennzeichnet,**
**daß** die Kopplungsflächen (12, 13) durch die Stirnflächen des Lichtleiters (10) gebildet werden.

4. Optische Verbindungseinheit nach Anspruch 1, 2 oder 3,
**dadurch gekennzeichnet,**
**daß** das Übertragungselement (11) einen elastischen Lichtleiter (10), insbesondere ein Kunststoff- oder Glasfaserkabel umfaßt.

5. Optische Verbindungseinheit nach einem der vorhergehenden Ansprüche,
**dadurch gekennzeichnet,**
**daß** seitlich des Lichtleiters (10) elastische Elemente, insbesondere elastisches Material (3) vorgesehen ist, durch die der Lichtleiter (10) im wesentlichen in eine vorgegebene Form gedrängt wird.

6. Optische Verbindungseinheit nach Anspruch 5,
**dadurch gekennzeichnet,**
**daß** der Lichtleiter (10) und das elastische Material (3) in einem gemeinsamen Gehäuse (1) angeordnet sind.

7. Optische Verbindungseinheit nach einem der vorhergehenden Ansprüche
**dadurch gekennzeichnet,**
**daß** an dem Gehäuse (1) ein Betätigungsorgan (15) zum Vorspannen des Übertragungselements (11) vorgesehen ist.

8. Optische Verbindungseinheit nach einem der vorhergehenden Ansprüche
**dadurch gekennzeichnet,**
**daß** der Lichtleiter durch das freie Ende eines Kunststoff- oder Glasfaserkabels gebildet wird.

9. Verwendung einer optischen Verbindungseinheit in einem optischen Netzwerk.
**dadurch gekennzeichnet,**
**dass** die optische Verbindungseinheit nach einem der Ansprüche 1 bis 8 ausgebildet ist.

10. Verwendung nach Anspruch 9,
**dadurch gekennzeichnet,**
**dass** die optische Verbindungseinheit zur Verbindung von Lichtleitern mit einem optischen Mischer (19), d.h. einem optischen Verteiler und/oder einer optischen Sammeleinheit verwendet wird.

## Claims

1. Optical connection unit for the optically conducting connection of optical elements (19, 18, 23) which conduct, receive and/or emit light, wherein the optical connection unit includes an optical transmission element (11) which has at least one coupling surface (12, 13) for the optical coupling to a coupling surface (21, 20) of one of the optical elements (18, 19, 23) and which is designed as a spring element such that the coupling surface (12, 13) of the transmission. element (11) can be biased in the direction of the coupling surface (21, 20) of the optical element (19, 18, 23), with the transmission element (11) including a flexible light conductor (10) having two ends (8, 9) and the light conductor (10) being arranged in a housing (1),
**characterised in that** the two ends (8, 9) of the light conductor (10) are guided outwardly through apertures (6, 7) formed in the housing (1); **in that** the light conductor (109 is also laterally deflected without an optical element (19, 28, 23) coupled on; and **in that**, when optical elements (19, 28, 23) are coupled to the transmission element, the two outwardly projecting ends (8, 9) of the light conductor (10) are moved toward the interior of the housing (1), whereby a further lateral deflection of the light conductor (10) and a biasing of the transmission element (11) is effected.

2. Optical connection unit in accordance with claim 1, **characterised in that** the transmission element (11) has at least two coupling surfaces (12, 13) for the coupling to the optical elements (19, 18, 23).

3. Optical connection unit in accordance with claim 2, **characterised in that** the coupling surfaces (12, 13) are formed by the end surfaces of the light conductor (10).

4. Optical connection unit in accordance with claim 1 or claim 2 or claim 3, **characterised in that** the transmission element (11) includes an elastic light conductor (10), in particular a plastic cable or a glass fibre cable.

5. Optical connection unit in accordance with any one of the preceding claims, **characterised in that** elastic elements, in particular elastic material (3), are/is provided laterally at the light conductor (10), by which the light conductor (10) is substantially urged into a predetermined shape.

6. Optical connection unit in accordance with claim 5, **characterised in that** the light conductor (10) and the elastic material (3) are arranged in a common housing (1).

7. Optical connection unit in accordance with any one of the preceding claims, **characterised in that** an actuation member (15) is provided at the housing (1) for the biasing of the transmission element (11).

8. Optical connection unit in accordance with any one of the preceding claims, **characterised in that** the light conductor is formed by the free end of a plastic cable or of a glass fibre cable.

9. Use of an optical connection unit in an optical network, **characterised in that** the optical connection unit is made in accordance with any one of claims 1 to 8.

10. Use in accordance with claim 9, **characterised in that** the optical connection unit is used for the connection of light conductors to an optical mixer (19), i.e. to an optical distributor and/or to an optical focusing unit.

## Revendications

1. Unité de connexion optique en vue de la connexion optiquement conductrice d'éléments optiques, conduisant, absorbant et/ou émettant de la lumière (19, 18, 23), l'unité de connexion optique contenant un élément de transfert optique (11) qui présente au moins une surface de couplage (12, 13) en vue du couplage optique à la surface de couplage (21, 20) d'un des éléments optiques (18, 19, 23) et qui est conçu en tant qu'élément à ressort, de telle sorte que l'élément de transfert (11), avec sa surface de couplage (12, 13), puisse être mis sous tension en direction de la surface de couplage (21, 20) de l'élément optique (19, 18, 23), l'élément de transfert (11) comprenant un guide d'ondes lumineuses souple (10) à deux extrémités (8, 9) et de telle sorte que le guide d'ondes lumineuse (10) étant disposé dans un boîtier (1),
**caractérisée en ce que**
les deux extrémités (8, 9) du guide d'ondes lumineuses (10) sont conduites vers l'extérieur par des ouvertures (6, 7) formées dans le boîtier (1), **en ce que** le guide d'ondes lumineuses (10) est basculé latéralement également sans élément optique accouplé (19, 28, 23) et que, lors de l'accouplement des éléments optiques (19, 28, 23) à l'élément de transfert, les deux extrémités faisant saillie vers l'extérieur (8, 9) du guide d'ondes lumineuses (10) sont déplacées vers l'intérieur du boîtier (1), moyennant quoi un basculement latéral supplémentaire du guide d'ondes lumineuses (10) et une mise sous tension préalable de l'élément de transfert (11) sont réalisés.

2. Unité de connexion optique selon la revendication 1,
**caractérisée en ce que**
l'élément de transfert (11) présente au moins deux surfaces de couplage (12, 13) en vue du couplage aux éléments optiques (19, 18, 23).

3. Unité de connexion optique selon la revendication 2,
**caractérisée en ce que**
les surfaces de couplage (.12, 13) sont formées par les faces frontales du guide d'ondes lumineuses (10).

4. Unité de connexion optique selon la revendication 1, 2 ou 3,
**caractérisée en ce que**
l'élément de transfert (11) comprend un guide d'ondes lumineuses élastique (10), en particulier un câble en fibres synthétiques ou en fibres de verre.

5. Unité de connexion optique selon l'une quelconque des revendications précédentes,
**caractérisée en ce que**,
latéralement par rapport au guide d'ondes lumineuses (10), sont prévus des éléments élastiques, en particulier un matériau élastique (3), à travers lequel le guide d'ondes lumineuses (10) est forcé pour l'essentiel dans une forme prédéterminée.

6. Unité de connexion optique selon la revendication 5,
**caractérisée en ce que**
le guide d'ondes lumineuses (10) et le matériau élastique (3) sont disposés dans un boîtier commun (1).

7. Unité de connexion optique selon l'une quelconque des revendications précédentes,
**caractérisée en ce que**
l'on prévoit, sur le boîtier (1), un organe de commande (15) en vue de la mise sous tension préalable de l'élément de transfert (11).

8. Unité de connexion optique selon l'une quelconque des revendications précédentes,
**caractérisée en ce que**
le guide d'ondes lumineuses est formé par l'extrémité libre d'un câble en fibres synthétiques ou en fibres de verre.

9. Utilisation d'une unité de connexion optique dans un réseau optique,
**caractérisée en ce que**
l'unité de connexion optique est conçue selon l'une des revendications 1 à 8.

10. Utilisation selon la revendication 9,
**caractérisée en ce que**
l'unité de connexion optique est utilisée en vue de la connexion de guides d'ondes lumineuses à un mélangeur optique (19), c'est-à-dire à un distributeur optique et/ou à une unité de collection optique.
